# EUROPÄISCHE PATENTSCHRIFT

(11) **EP 3 434 413 B1**
(45) Veröffentlichungstag und Bekanntmachung des Hinweises auf die Patenterteilung: **30.03.2022**
(21) Anmeldenummer: 18185498.5
(22) Anmeldetag: 25.07.2018
(51) Int. Cl.: B23Q 17/00, G05B 19/4065, G07C 3/00, B23Q 17/22

(54) **VORRICHTUNG ZUM ERMITTELN VON HOCHBELASTETEN POSITIONEN BEI EINER WERKZEUGMASCHINE**
DEVICE FOR DETERMINING HIGHLY CONTAMINATED POSITIONS IN A MACHINE TOOL
DISPOSITIF DE DÉTERMINATION DE POSITIONS FORTEMENT CHARGÉES DANS UNE MACHINE-OUTIL

(30) Priorität: 26.07.2017 DE 102017116869
(43) Veröffentlichungstag der Anmeldung: 30.01.2019
(73) Patentinhaber: CHIRON Group SE, 78532 Tuttlingen (DE)
(72) Erfinder: Eppler, Claus, 72469 Meßstetten (DE); Schröder, Pascal, 78570 Mühlheim an der Donau (DE)
(74) Vertreter: Witte, Weller & Partner Patentanwälte mbB

(56) Entgegenhaltungen:
- EP-A1- 3 001 265
- DE-A1-102005 023 252
- DE-A1-102014 220 313
- DE-A1-102016 212 023

## Beschreibung

Die vorliegende Erfindung betrifft eine Vorrichtung zum Ermitteln von hochbelasteten Positionen bei einer Werkzeugmaschine, wobei die Werkzeugmaschine eine Spindeleinheit aufweist, die einen Spindelkopf und einen Spindelmotor hat.

Mit einer Werkzeugmaschine lassen sich Werkstücke hochpräzise bearbeiten. Es ist jedoch bekannt, dass die Bearbeitungsgenauigkeit einer Werkzeugmaschine im Laufe der Zeit nachlässt. Es können daher Zyklen festgelegt werden, in denen die beweglichen Teile einer Werkzeugmaschine ausgetauscht werden. Alternativ oder zusätzlich hierzu besteht die Möglichkeit, mittels Stichproben der gefertigten Werkstücke zu überprüfen, ob die Werkstücke noch innerhalb der vorgegebenen Toleranzen gefertigt werden. Ist dies nicht mehr der Fall, werden die beweglichen Elemente einer Werkzeugmaschine ausgetauscht.

DE 10 2005 023252 A1 offenbart eine Vorrichtung zum Ermitteln von hochbelasteten Positionen bei einer Anlage mit einem beweglichen Anlagenteil, die Vorrichtung aufweisend:
- eine Messeinheit, die dafür ausgebildet ist, während des Betriebs der Anlage Messwerte zu dem Anlagenteil zu erfassen, wobei die Messwerte eine aktuelle Position des Anlagenteils relativ zu einem Fixpunkt der Anlage aufweisen;
- eine Speichereinheit, die dafür ausgebildet ist, die von der Messeinheit erfassten Messwerte zu speichern;
- eine Belastungsermittlungseinheit, die dafür ausgebildet ist, unter Berücksichtigung der in der Speichereinheit erfassten Messwerte für die erfassten Positionen jeweils einen zugeordneten Belastungswert zu ermitteln; und
- eine Ausgabeeinheit, die dafür ausgebildet ist, die erfassten Positionen mit dem jeweiligen zugeordneten Belastungswert auszugeben (Berechnung eines Schädigungsgrades).

Es ist eine Aufgabe der vorliegenden Erfindung, eine Vorrichtung aufzuzeigen, mit der die Notwendigkeit eines Tauschs von beweglichen Teilen der Werkzeugmaschine effektiver erkannt werden kann.

Die Aufgabe wird gelöst durch eine Vorrichtung nach Anspruch 1.

Im Rahmen der Erfindung haben die Erfinder erkannt, dass die herkömmlichen Herangehensweisen zum Feststellen, ob die beweglichen Teile einer Werkzeugmaschine ausgetauscht werden müssen, Nachteile aufweisen. So kann das zyklusmäßige Austauschen zum Beispiel dazu führen, dass die beweglichen Teile ausgetauscht werden, obwohl die Werkzeugmaschine immer noch mit einer Präzision im Rahmen der vorgegebenen Toleranzen fertigt, oder bewegliche Teile noch nicht ausgetauscht werden, obwohl die Präzision der Fertigung bereits ein erlaubtes Toleranzfenster verlassen hat. Das Durchführen von Stichproben ermöglicht es zwar sehr genau, die Präzision der Fertigung zu überprüfen, jedoch kann eine solche Überprüfung sehr aufwändig sein, insbesondere wenn die Überprüfung selbst mit einer hohen Präzision durchgeführt werden soll.

Gemäß einem Aspekt der Erfindung wird während des Betriebs der Spindeleinheit die aktuelle Position des Spindelkopfs relativ zu einem Fixpunkt der Werkzeugmaschine erfasst. Der Fixpunkt kann im Wesentlichen frei gewählt werden, sofern die sich stets verändernde Position des Spindelkopfs bei seiner Verlagerung erfasst werden kann und erkannt werden kann, wenn sich der Spindelkopf wieder an einer bereits früher erreichten Position befindet. So kann insbesondere ein Gehäuse der Werkzeugmaschine oder ein Standfuß der Werkzeugmaschine als Fixpunkt gewählt werden. Vorteilhafterweise kann auch ein Anschlag des Spindelkopfs als Fixpunkt gewählt werden, der eine Verlagerung des Spindelkopfs entlang seiner Verlagerungsrichtung begrenzt.

Die Erfassung der Messwerte kann in konstanten oder variablen Intervallen erfolgen. Die Intervalle können sich dabei sowohl auf ein Fortschreiten im Hinblick auf die Zeit als auch ein Fortschreiten im Hinblick auf den Ort beziehen. Dabei sind auch kombinierte Erfassungen möglich. So erfolgt insbesondere die Erfassung eines Messwerts, wenn ein bestimmtes Zeitintervall oder ein bestimmtes Streckenintervall überschritten wurde. Steht eine Reduzierung der erfassten Messwerte im Vordergrund, kann eine Erfassung auch derart erfolgen, dass ein Messwert nur dann erfasst wird, wenn ein bestimmtes Zeitintervall und ein bestimmtes Streckenintervall überschritten wurden.

Es besteht zudem die Möglichkeit, die erfassten Messwerte in ein vorgegebenes Raster einzupassen. Dies kann beispielsweise durch Runden geschehen. Dies ermöglicht es auf einfache Weise, kleine Messfehler zu unterdrücken. So kann insbesondere verhindert werden, dass dem Spindelkopf aufgrund eines kleinen Messfehlers eine andere Position zugeordnet wird, obwohl er sich erneut an derselben tatsächlichen Position befindet. Es ist bevorzugt, dass zwischen zwei erfassten Messwerten zusätzliche virtuelle Messwerte erzeugt werden. Dies basiert auf der Annahme, dass ein Großteil der Verlagerungen des Spindelkopfs mit gleichbleibender Geschwindigkeit erfolgt. Basierend auf dieser Annahme ist es dann möglich, auf Basis der Informationen, dass der Spindelkopf zu einem ersten Zeitpunkt an einer ersten Position und zu einem zweiten Zeitpunkt an einer zweiten Position war, dazwischenliegende virtuelle Messwerte der Position durch Interpolation zu berechnen.

Die erfassten Messwerte werden in der Speichereinheit gespeichert. Werden zusätzliche virtuelle Messwerte erzeugt, werden auch diese in der Speichereinheit gespeichert. Wenn der benötigte Speicherplatz gering gehalten werden soll, kann auch lediglich eine Teilmenge der erfassten Messwerte gespeichert werden, beispielsweise nur jeder zweite, dritte, vierte, etc. Messwert. Bevorzugt ist es dann aber, bereits von der Messeinheit weniger Messwerte erfassen zu lassen, beispielsweise indem die oben genannten Intervalle vergrößert werden.

Die Belastungsermittlungseinheit hat Zugriff auf die in der Speichereinheit erfassten Messwerte. Je nach Ausgestaltung kann die Belastungsermittlungseinheit alle gespeicherten Messwerte oder lediglich einen Teil der gespeicherten Messwerte benutzen, um den zugeordneten Belastungswert zu ermitteln. Ferner ist es möglich, dass die Belastungsermittlungseinheit nur einen Teil der in einem Messwert enthaltenen Informationen verwendet, wenn der Messwert, wie nachfolgend noch erläutert wird, mehrere Informationskomponenten enthält. Solche Zusatzwerte werden nachfolgend noch erläutert.

Wenn die Belastungsermittlungseinheit den Belastungswert nur auf der Basis von Messwerten ermitteln soll, die eine aktuelle Position des Spindelkopfs beschreiben, ermittelt die Belastungsermittlungseinheit den Belastungswert für eine Position durch eine Zählung, wie oft der Spindelkopf an dieser Position war. Demnach wird einer ersten Position, an der der Spindelkopf öfter war als an einer zweiten Position, ein anderer Belastungswert zugeordnet, insbesondere höherer Belastungswert, dem entnommen werden kann, dass an der ersten Position eine höhere Belastung angenommen wird als an der zweiten Position.

Die Ausgabeeinheit gibt entweder noch während des Betriebs oder nach Beendigung des Betriebs die gewonnenen Informationen aus. Dabei ist es eine Möglichkeit, alle erfassten Positionen oder auch nur einen Teil aller erfassten Positionen mit dem jeweiligen zugeordneten Belastungswert auszugeben. Dabei können auch Schwellwerte verwendet werden, insbesondere, dass eine erfasste Position nur dann ausgegeben wird, wenn ein zugeordneter Belastungswert einen vorgegebenen oder einstellbaren Belastungswert überschreitet. Die erfassten Positionen können nach der Größe des Belastungswerts sortiert ausgegeben werden. Diese Art der Ausgabe ist insbesondere für eine bildliche Darstellung, zum Beispiel durch einen Graphen oder eine farbliche Darstellung, geeignet.

Die Ausgabeeinheit soll dafür ausgebildet sein, die genannten erfassten Positionen mit dem jeweiligen zugeordneten Belastungswert auszugeben. Dies schließt auch einfache Ausführungsformen ein, bei denen die Ausgabeeinheit dann aber lediglich eine erfasste Position bzw. erfasste Positionen ohne den jeweiligen Belastungswert ausgibt. Die Ausgabeeinheit kann auch über eine Logikschaltung verfügen oder mit einer Logikschaltung verbunden sein, die eine Ausgabe von Positionen und Belastungswerten unterdrückt, wenn der Belastungswert unterhalb eines vorgegebenen Schwellwerts liegt. Die Ausgabeeinheit kann auch dafür ausgebildet sein, die genannten erfassten Positionen ohne den jeweiligen zugeordneten Belastungswert auszugeben.

Eine andere Möglichkeit besteht darin, dass die Ausgabeeinheit aus einer Gesamtzahl der ermittelten Belastungswerte mindestens einen Hochbelastungswert ermittelt, der größer ist als die anderen Belastungswerte der Gesamtzahl. Es wird dann der mindestens eine ermittelte Hochbelastungswert mit der ihm zugeordneten Position ausgegeben. Dabei besteht sowohl die Möglichkeit, lediglich den maximalen Hochbelastungswert auszugeben, ggf. mit der ihm zugeordneten Position, aber auch die N höchsten Hochbelastungswerte auszugeben, wobei N > 1 ist.

Der Benutzer erhält so auf einfache Weise eine Information darüber, wo sich eine hochbelastete Position der Werkzeugmaschine befindet. Eine Analyse, ob eventuell bewegliche Teile der Werkzeugmaschine auszutauschen sind, kann nun entweder an einer gezielten Stelle an der Werkzeugmaschine oder aber an der korrespondierenden Stelle eines gefertigten Werkstücks erfolgen. Die Fertigungspräzision der Werkzeugmaschine kann somit mit weniger Zeitaufwand und/oder engmaschiger überprüft werden.

Damit ist die Aufgabe vollständig gelöst.

Bei einer bevorzugten Ausgestaltung weist die Vorrichtung ferner einen Zeitgeber auf, der dafür ausgebildet ist, während des Betriebs der Spindeleinheit eine fortlaufende Zeitinformation zu erzeugen und die Zeitinformation zeitlich zu den erfassten Messwerten auszugeben.

Die Zeitinformation kann direkt oder indirekt in die Ermittlung des Belastungswerts einfließen. Eine direkte Verwendung kann insbesondere dahingehend erfolgen, dass einer Position entweder zusätzlich oder alternativ zu der genannten Häufigkeit eine Zeit zugeordnet wird, wie lange der Spindelkopf an einer bestimmten Position war. Ist aus der Verwendung der Werkzeugmaschine heraus zum Beispiel die Annahme gerechtfertigt, dass sich eine höhere Belastung an einer Position einstellt, an der der Spindelkopf länger verweilt, so kann der Belastungswert im Hinblick auf die jeweilige Zeitdauer an einer bestimmten Position zugeordnet werden. Eine bevorzugte indirekte Nutzung der Zeitinformation ergibt sich dadurch, dass sie für eine Berechnung einer momentanen Geschwindigkeit des Spindelkopfs an einer bestimmten Position herangezogen wird. Dadurch kann man sich die Annahme zunutze machen, dass Positionen, die mit hoher Geschwindigkeit durchfahren werden, einer höheren Belastung unterworfen sind als Positionen, die mit niedriger Geschwindigkeit durchfahren werden. Entsprechend wird bei isolierter Betrachtung lediglich eines Messwerts einer ersten Position, die mit einer höheren Geschwindigkeit durchfahren wird als eine zweite Position, ein anderer Belastungswert zugeordnet, insbesondere ein höherer Belastungswert.

Bei einer weiteren vorteilhaften Ausgestaltung weisen die Messwerte ferner einen Zusatzwert auf, der eine Geschwindigkeit des Spindelkopfs relativ zu dem Fixpunkt aufweist.

Bei dieser Ausgestaltung ist die Geschwindigkeit des Spindelkopfs bereits in den Messwerten enthalten. Eine mögliche vorteilhafte Verwendung der Geschwindigkeit wurde bereits erläutert. Es ist bei dieser Ausgestaltung bevorzugt, dass die Geschwindigkeit direkt gemessen wird, bevorzugt durch einen Geschwindigkeitsgeber am Spindelkopf. Es sei darauf hingewiesen, dass bei Berücksichtigung dieses und/oder der nachfolgenden Zusatzwerte, mehrere Zusatzwerte bei der Zuordnung eines Belastungswerts berücksichtigt werden können. Es ist ferner möglich, denselben Zusatzwert unterschiedlich auszuwerten, zum Beispiel einmal hinsichtlich eines Durchschnittswerts und einmal hinsichtlich eines Maximalwerts, und beide Auswertungen in die Zuordnung des Belastungswerts einfließen zu lassen.

Bei einer weiteren vorteilhaften Ausgestaltung weisen die Messwerte ferner einen Zusatzwert auf, der eine Beschleunigung des Spindelkopfs relativ zu dem Fixpunkt aufweist.

Bei dieser Ausgestaltung wird, ähnlich den Überlegungen bezüglich der Geschwindigkeit, davon ausgegangen, dass Positionen, an denen eine hohe Beschleunigung gegeben ist, einer höheren Belastung unterworfen sind als Positionen, an denen eine geringere Beschleunigung vorliegt. In ähnlicher Weise wird dann bevorzugt, bei isolierter Betrachtung lediglich eines Messwerts, einer ersten Position, an der eine hohe Beschleunigung gegeben ist, ein anderer Belastungswert zugeordnet, insbesondere ein höherer Belastungswert, als einer zweiten Position, an der eine geringere Beschleunigung vorliegt. Bei dieser Ausgestaltung erfolgt die Erfassung der Beschleunigung bevorzugt durch eine Messung am Spindelkopf, insbesondere durch einen Beschleunigungsmesser.

Bei einer weiteren vorteilhaften Ausgestaltung wird der Zusatzwert aus einem Steuerprogramm der Werkzeugmaschine gewonnen.

Diese Ausgestaltung nutzt in vorteilhafter Weise die Erkenntnis, dass sich aus den Steuerbefehlen für den Spindelkopf errechnen lässt, an welchen Positionen der Spindelkopf welche Geschwindigkeit und/oder welche Beschleunigung hat. In diesem Fall können Geschwindigkeits- und/oder Beschleunigungswerte bei der Zuordnung eines Belastungswerts berücksichtigt werden, ohne jedoch einen Geschwindigkeitsgeber und/oder einen Beschleunigungsmesser am Spindelkopf bereitstellen zu müssen. Bei der Gewinnung des Zusatzwerts, sei es die Geschwindigkeit oder die Beschleunigung, können allgemeine Erkenntnisse über die Bewegungscharakteristik des Spindelkopfs einfließen. Ist beispielsweise der zeitliche Verlauf von Geschwindigkeit und/oder Beschleunigung bei einer Verlagerung um 1 mm, um einen 1 cm und/oder um 10 cm bekannt, so können aus einem bestimmten Positionsverlagerungsbefehl recht genau die tatsächlichen Geschwindigkeiten und/oder Beschleunigungen ermittelt werden.

Bei einer weiteren vorteilhaften Ausgestaltung weisen die Messwerte einen Zusatzwert auf, der eine auf den Spindelkopf wirkende mechanische Last aufweist.

Bei dieser Ausgestaltung wird die mechanische Last aufgenommen, mit der der Spindelkopf bei der Bearbeitung eines in der Werkzeugmaschine eingespannten Werkstücks belastet wird. Es wird dabei die Annahme getroffen, dass eine Position, an der der Spindelkopf unter höherer mechanischer Last steht, eine höhere Belastung erfährt, als eine zweite Position, an der der Spindelkopf eine geringere mechanischer Last erfährt. Die auf den Spindelkopf wirkende mechanische Last kann durch die Ermittlung einer Kraft, eines Drehmoments, einer Torsion oder einer Biegung, sowie durch Kombination von zwei dieser Messgrößen oder mehr ermittelt werden. Es besteht zwar auch hier grundsätzlich die Möglichkeit, den Zusatzwert aus einem Steuerprogramm zu gewinnen, jedoch erscheint die Übereinstimmung mit der Realität als zu wenig aussagekräftig.

Bei einer weiteren vorteilhaften Ausgestaltung weisen die Messwerte ferner einen Zusatzwert auf, der einen in den Spindelmotor fließenden Strom aufweist.

Diese Ausgestaltung geht von der Annahme aus, dass der in den Spindelmotor fließende Strom eine Auswirkung auf die Belastung einer Position hat. Dabei wird insbesondere angenommen, dass ein hoher Strom zu einer höheren Belastung an einer Position führt als ein geringerer Strom. Demnach wird, bei isolierter Betrachtung lediglich eines Messwerts, einer ersten Position, an der ein hoher Stromwert gemessen wird, ein anderer Belastungswert zugeordnet, insbesondere ein höherer Belastungswert, als einer zweiten Position, an der ein geringerer Stromwert gemessen wird. Es besteht zwar auch hier grundsätzlich die Möglichkeit, den Zusatzwert aus einem Steuerprogramm zu gewinnen, jedoch erscheint die Übereinstimmung mit der Realität als zu wenig aussagekräftig.

Bei einer weiteren vorteilhaften Ausgestaltung weisen die Messwerte ferner einen Zusatzwert auf, der eine Drehzahl eines Werkzeugeinsatzes des Spindelkopfs aufweist.

Diese Ausgestaltung geht von der Annahme aus, dass die Drehzahl eines Werkzeugeinsatzes des Spindelkopfs eine Auswirkung auf die Belastung einer Position hat. Dabei wird insbesondere angenommen, dass eine hohe Drehzahl zu einer höheren Belastung an einer Position führt als eine geringere Drehzahl. Demnach wird, bei isolierter Betrachtung lediglich eines Messwerts, einer ersten Position, an der eine hohe Drehzahl gemessen wird, ein anderer Belastungswert zugeordnet, insbesondere ein höherer Belastungswert, als einer zweiten Position, an der eine geringere Drehzahl gemessen wird. Es besteht auch hier grundsätzlich die Möglichkeit, den Zusatzwert aus einem Steuerprogramm zu gewinnen, insbesondere wenn eine Drehzahlregelung erfolgt.

Erfindungsgemäß wird der Belastungswert derart ermittelt oder fließt in die Ermittlung des Belastungswerts ein, dass einer ersten Position, die öfter in den Messwerten erfasst wurde, ein höherer Wert zugeordnet wird als einer zweiten Position, die weniger oft in den Messwerten erfasst wurde als die erste Position.

Die Erfindung bietet eine einfach zu realisierende Möglichkeit, allein auf der Grundlage von erfassten Positionen, aber auch im Zusammenhang mit einem oder mehreren Zusatzwerten, verschiedenen Positionen entsprechende Belastungswerte zuzuordnen. Insbesondere kann die resultierende Information dann als Häufigkeitsverteilung ausgegeben werden.

Bei einer weiteren vorteilhaften Ausgestaltung wird der Belastungswert derart ermittelt oder fließt in die Ermittlung des Belastungswerts ein, dass einer ersten Position, an der eine erste Summe der an der ersten Position erfassten Zusatzwerte größer ist, ein höherer Wert zugeordnet wird als einer zweiten Position, an der eine zweite Summe der entsprechenden an der zweiten Position erfassten Zusatzwerte kleiner ist.

Diese Ausgestaltung macht sich die Annahme zunutze, dass die Belastung einer Position kumulativ durch mehrere Belastungen entsteht. Ferner wird angenommen, dass eine hohe Belastung sowohl durch eine einmalige hohe Belastung als auch eine große Anzahl kleiner Belastungen entstehen kann. Bevorzugt werden bei der Summierung die Messwerte gewichtet. Dies entspricht der Annahme, dass eine hohe Belastung nicht gleichwirkend zu, zum Beispiel, zehnmal einem Zehntel dieser Belastung ist. Vielmehr zeigt die Praxis, dass ein durch Belastungen hervorgerufener Verschleiß überproportional ansteigt, also stärker als linear, im Vergleich zu mehrfachen niedrigeren Belastungen. Man kann hohe Belastungen daher insbesondere mit einem Faktor größer als 1 beaufschlagen, um diesem Effekt Rechnung zu tragen.

Bei einer weiteren vorteilhaften Ausgestaltung wird der Belastungswert derart ermittelt oder fließt in die Ermittlung des Belastungswerts ein, dass einer ersten Position, an der ein erstes Maximum der an der ersten Position erfassten Zusatzwerts größer ist, ein höherer Wert zugeordnet wird als einer zweiten Position, an der ein zweites Maximum der entsprechenden an einer zweiten Position erfassten Zusatzwerte kleiner ist.

Diese Ausgestaltung berücksichtigt die Annahme, dass insbesondere ein hoher Zusatzwert die Belastung an einer bestimmten Position bedingt. Dabei ist davon auszugehen, dass eine erste Position mit einem größeren Maximum als an einer zweiten Position auch einem größeren Verschleiß unterliegt. Bevorzugt fließt die Berücksichtigung des Maximums in Verbindung mit einer weiteren Auswertung in die Zuordnung des Belastungswerts ein.

Bei einer weiteren vorteilhaften Ausgestaltung wird der Belastungswert derart ermittelt oder fließt in die Ermittlung des Belastungswerts ein, dass Messwerte, insbesondere Zusatzwerte, die einen vorgegebenen Schwellwert überschreiten, mit einem additiven Element oder einem Faktor beaufschlagt werden.

Dieser Ausgestaltung liegt die Annahme zugrunde, dass niedrige Messwerte, einschließlich eventueller Zusatzwerte, kaum eine Auswirkung auf einen Verschleiß haben und die entsprechenden Positionen daher als niedrig belastet gelten können. Liegen hingegen hohe Messwerte, einschließlich der Zusatzwerte, vor, so muss von einer hohen Belastung ausgegangen werden. Diese hohe Belastung sollte auch erkennbar sein, selbst wenn die absolute Anzahl des Auftretens dieser Fälle gering ist. Entsprechend kann man für niedrige Messwerte das additive Element negativ wählen oder den Faktor kleiner als 1 wählen, wohingegen man alternativ oder zusätzlich für hohe Messwerte das additive Element positiv wählt oder einen Faktor größer als 1 wählt.

Bei einer weiteren vorteilhaften Ausgestaltung ist die Messeinheit, ferner dafür ausgebildet, während des Betriebs der Spindeleinheit weitere Messwerte zu dem Spindelkopf zu erfassen, wobei die weiteren Messwerte eine aktuelle weitere Position des Spindelkopfs entlang einer weiteren Achse aufweisen, die in einem Winkel zu einer Achse steht, entlang derer die erfassten Positionen bestimmt werden; die Speichereinheit ist ferner dafür ausgebildet, die von der Messeinheit erfassten weiteren Messwerte zu speichern; die Belastungsermittlungseinheit ist ferner dafür ausgebildet, unter Berücksichtigung der in der Speichereinheit erfassten Messwerte und weiteren Messwerte für Positionswertepaare von erfassten Positionen und weiteren Positionen jeweils einen zugeordneten Belastungswert zu ermitteln; und die Ausgabeeinheit ist ferner dafür ausgebildet, die Positionswertepaare mit dem jeweiligen zugeordneten Belastungswert auszugeben oder aus einer Gesamtzahl der ermittelten Belastungswerte mindestens einen Hochbelastungswert zu ermitteln, der größer ist als die anderen Belastungswerte der Gesamtzahl, und den mindestens einen ermittelten Hochbelastungswert mit dem jeweiligen zugeordneten Positionswertepaar auszugeben.

Ausführungsbeispiele der Erfindung sind in der Zeichnung näher dargestellt und werden in der nachfolgenden Beschreibung näher erläutert. Es zeigen:
Fig. 1 eine Ausführungsform einer Werkzeugmaschine mit einer Vorrichtung zum Ermitteln von hochbelasteten Positionen gemäß einer Ausführungsform;
Fig. 2 Details der Vorrichtung aus Fig. 1;
Fig. 3 verschiedene Ausführungsformen einer Ausgabe von der Ausgabeeinheit; und
Fig. 4 eine weitere Ausführungsform einer Ausgabe der Ausgabeeinheit.

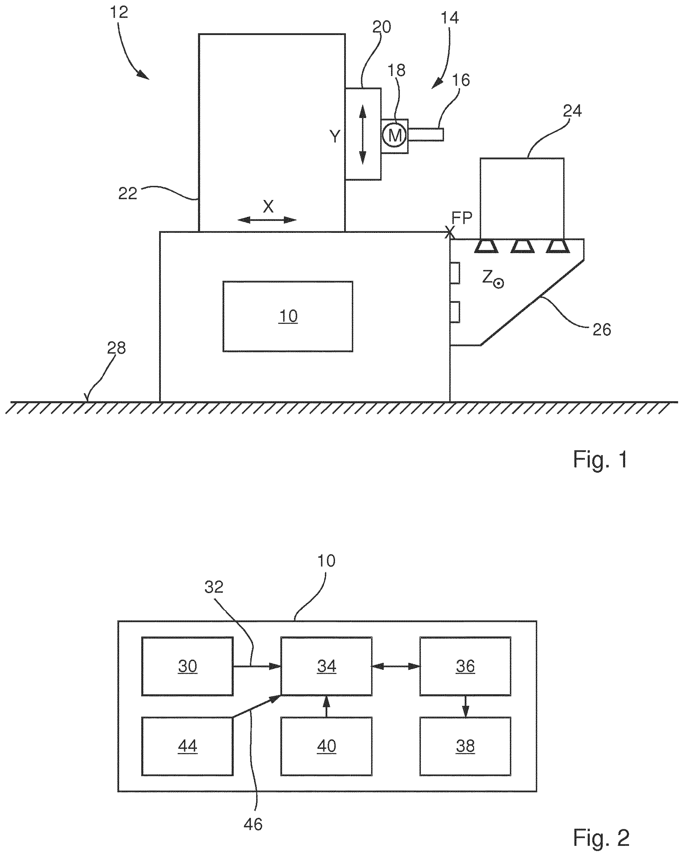

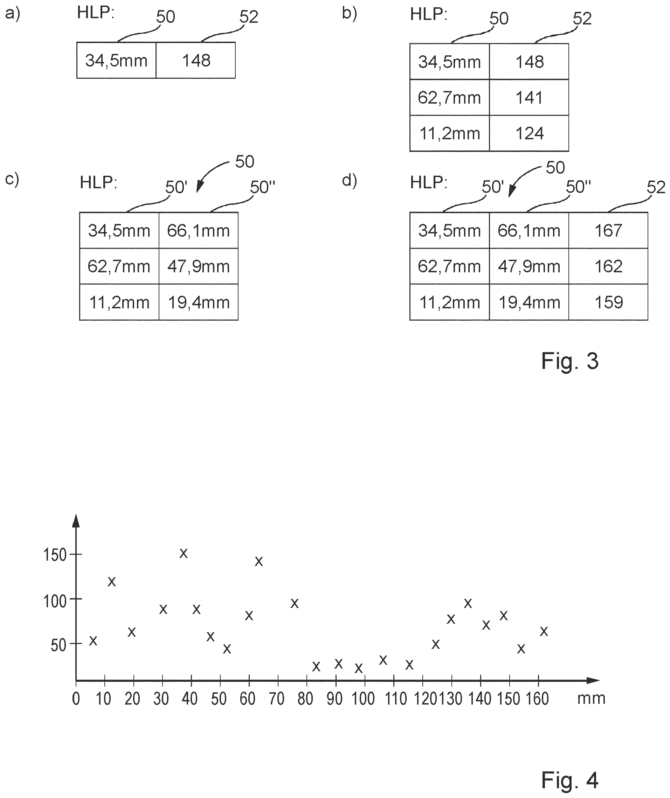

Fig. 1 zeigt eine Vorrichtung 10 zum Ermitteln von hochbelasteten Positionen 50 (siehe Fig. 3) bei einer Werkzeugmaschine 12 mit einer Spindeleinheit 14, die einen Spindelkopf 16 und einen Spindelmotor 18 hat.

Bei der hier gezeigten Werkzeugmaschine 12 handelt es sich lediglich um ein Beispiel einer Werkzeugmaschine, konkret eine Werkzeugmaschine in Konsolbettbauweise. Es ist zu erkennen, dass der Spindelkopf 16 mittels einer ersten Verfahreinheit 20 in Y-Richtung und mittels einer zweiten Verfahreinheit 22 in X-Richtung verfahren werden kann. Ferner kann das Werkstück 24 auf einer dritten Verfahreinheit 26 zudem in Z-Richtung verfahren werden. Es ist ferner ein Fixpunkt FP der Werkzeugmaschine 12 dargestellt, der bei allen Bearbeitungsvorgängen der Werkzeugmaschine 12 fix zu einer symbolisch dargestellten Erdoberfläche 28 ist. Der Fixpunkt FP kann aber auch zum Beispiel in einem Standfuß der Werkzeugmaschine 12 gewählt werden.

Fig. 2 zeigt Elemente der Vorrichtung 10 aus Fig. 1. Eine Messeinheit 30 ist dafür ausgebildet, während des Betriebs der Spindeleinheit 14 Messwerte zu dem Spindelkopf 16 zu erfassen, wobei die Messwerte 32 eine aktuelle Position 50 des Spindelkopfs 16 relativ zu dem Fixpunkt FP der Werkzeugmaschine 12 aufweisen.

Eine Speichereinheit 34 ist dafür ausgebildet, die von der Messeinheit 30 erfassten Messwerte 32 zu speichern. Eine Belastungsermittlungseinheit 36 ist dafür ausgebildet, unter Berücksichtigung der in der Speichereinheit 34 erfassten Messwerte 32 für die erfassten Positionen 50 jeweils einen zugeordneten Belastungswert 52 zu ermitteln.

Eine Ausgabeeinheit 38 ist dafür ausgebildet, die erfassten Positionen 50 mit dem jeweiligen zugeordneten Belastungswert 52 auszugeben oder aus einer Gesamtzahl der ermittelten Belastungswerte 52 mindestens einen Hochbelastungswert zu ermitteln, der größer ist als die anderen Belastungswerte der Gesamtzahl, und den mindestens einen ermittelten Hochbelastungswert mit der ihm zugeordneten Position 50 auszugeben. Bei der gezeigten Ausführungsform kann die Ausgabeeinheit 38 einen Bildschirm aufweisen.

Ein Zeitgeber 40 ist dafür ausgebildet, während des Betriebs der Spindeleinheit 14 eine fortlaufende Zeitinformation 42 zu erzeugen und die Zeitinformation 42 zeitgleich zu den erfassten Messdaten 32 auszugeben. Es ist schließlich auch ein Steuerprogramm 44 gezeigt, aus dem Zusatzwerte 46 gewonnen werden können.

Fig. 3 zeigt einige Ausführungsformen der Ausgabe HLP der Ausgabeeinheit 38. Die Ausführungsform a) zeigt den höchsten Belastungswert 52 mit der ihm zugeordneten Position 50 an. Ausführungsform b) zeigt die drei höchsten Belastungswerte 52 in absteigender Reihenfolge mit der jeweils zugeordneten Position 50 an.

Ausführungsform c) zeigt die drei Positionen 50 mit den höchsten Belastungswerten 52 an, wobei jede der Positionen durch eine erfasste Position 50' entlang einer ersten Richtung, zum Beispiel die X-Richtung, und einer weiteren Position 50" entlang einer zweiten Richtung, zum Beispiel die Y-Richtung, beschrieben werden. Ausführungsform d) ist ähnlich der Ausführungsform c), wobei hier nun aber zudem die entsprechenden Belastungswerte 52 ausgegeben werden.

Fig. 4 zeigt eine weitere Ausführungsform der Ausgabe der Ausgabeeinheit 38. Die Positionen 50 sind hier entlang der x-Achse abgetragen, und die Belastungswerte 52 sind entlang der y-Achse abgetragen. Die mit einem Kreuz gekennzeichneten Punkte zeigen, welcher Position welcher Belastungswert zugeordnet ist und umgekehrt.

## Patentansprüche

1. Vorrichtung (10) zum Ermitteln von hochbelasteten Positionen (50) bei einer Werkzeugmaschine (12) mit einer Spindeleinheit (14), die einen Spindelkopf (16) und einen Spindelmotor (18) hat, die Vorrichtung (10) aufweisend:
- eine Messeinheit (30), die dafür ausgebildet ist, während des Betriebs der Spindeleinheit (14) Messwerte (32) zu dem Spindelkopf (16) zu erfassen, wobei die Messwerte (32) eine aktuelle Position (50) des Spindelkopfs (16) relativ zu einem Fixpunkt (FP) der Werkzeugmaschine (12) aufweisen;
- eine Speichereinheit (34), die dafür ausgebildet ist, die von der Messeinheit (30) erfassten Messwerte (32) zu speichern;
- eine Belastungsermittlungseinheit (36), die dafür ausgebildet ist, unter Berücksichtigung der in der Speichereinheit (34) erfassten Messwerte (32) für die erfassten Positionen (50) jeweils einen zugeordneten Belastungswert (52) zu ermitteln; und
- eine Ausgabeeinheit (38), die dafür ausgebildet ist, die erfassten Positionen (50) mit dem jeweiligen zugeordneten Belastungswert (52) auszugeben oder aus einer Gesamtzahl der ermittelten Belastungswerte (52) mindestens einen Hochbelastungswert zu ermitteln, der größer ist als die anderen Belastungswerte (52) der Gesamtzahl, und den mindestens einen ermittelten Hochbelastungswert mit der ihm zugeordneten Position (50) auszugeben,
wobei der Belastungswert (52) derart ermittelt wird oder in die Ermittlung des Belastungswerts (52) einfließt, dass einer ersten Position (50), die öfter in den Messwerten (32) erfasst wurde, ein höherer Wert zugeordnet wird als einer zweiten Position (50), die weniger oft in den Messwerten erfasst wurde als die erste Position (50).

2. Vorrichtung nach Anspruch 1, ferner mit einem Zeitgeber, der dafür ausgebildet ist, während des Betriebs der Spindeleinheit (14) eine fortlaufende Zeitinformation (42) zu erzeugen und die Zeitinformation (42) zeitgleich zu den erfassten Messwerten (32) auszugeben.

3. Vorrichtung nach einem der vorhergehenden Ansprüche, wobei die Messwerte (32) ferner einen Zusatzwert (46) aufweisen, der eine Geschwindigkeit des Spindelkopfs (16) relativ zu dem Fixpunkt (FP) aufweist.

4. Vorrichtung nach einem der vorhergehenden Ansprüche, wobei die Messwerte (32) ferner einen Zusatzwert (46) aufweisen, der eine Beschleunigung des Spindelkopfs (16) relativ zu dem Fixpunkt (FP) aufweist.

5. Vorrichtung nach einem der Ansprüche 3 oder 4, wobei der Zusatzwert (46) aus einem Steuerprogramm (44) der Werkzeugmaschine (12) gewonnen wird.

6. Vorrichtung nach einem der vorhergehenden Ansprüche, wobei die Messwerte (32) ferner einen Zusatzwert (46) aufweisen, der eine auf den Spindelkopf (16) wirkende mechanische Last aufweist.

7. Vorrichtung nach einem der vorhergehenden Ansprüche, wobei die Messwerte (32) ferner einen Zusatzwert (46) aufweisen, der einen in den Spindelmotor (16) fließenden Strom aufweist.

8. Vorrichtung nach einem der vorhergehenden Ansprüche, wobei die Messwerte (32) ferner einen Zusatzwert aufweisen, der eine Drehzahl des Spindelkopfs (16) aufweist.

9. Vorrichtung nach einem der vorhergehenden Ansprüche, wobei der Belastungswert (52) derart ermittelt wird oder in die Ermittlung des Belastungswerts (52) einfließt, dass einer ersten Position (50), an der eine erste Summe der an der ersten Position (50) erfassten Zusatzwerte größer ist, ein höherer Wert zugeordnet wird als einer zweiten Position (50), an der eine zweite Summe der entsprechenden an der zweiten Position (50) erfassten Zusatzwerte kleiner ist.

10. Vorrichtung nach einem der vorhergehenden Ansprüche, wobei der Belastungswert (52) derart ermittelt wird oder in die Ermittlung des Belastungswerts (52) einfließt, dass einer ersten Position (50), an der ein erstes Maximum der an der ersten Position (50) erfassten Zusatzwerte größer ist, ein höherer Wert zugeordnet wird als einer zweiten Position (50), an der ein zweites Maximum der entsprechenden an der zweiten Position (50) erfassten Zusatzwerte kleiner ist.

11. Vorrichtung nach einem der vorhergehenden Ansprüche, wobei der Belastungswert (52) derart ermittelt wird oder in die Ermittlung des Belastungswerts (52) einfließt, dass Messwerte (32), insbesondere Zusatzwerte, die einen vorgegebenen Schwellwert überschreiten mit einem additiven Element oder einem Faktor beaufschlagt werden.

12. Vorrichtung nach einem der vorhergehenden Ansprüche, wobei
- die Messeinheit (30), ferner dafür ausgebildet ist, während des Betriebs der Spindeleinheit (14) weitere Messwerte zu dem Spindelkopf (16) zu erfassen, wobei die weiteren Messwerte eine aktuelle weitere Position (50") des Spindelkopfs (16) entlang einer weiteren Achse aufweisen, die in einem Winkel zu einer Achse steht, entlang derer die erfassten Positionen (50') bestimmt werden;
- eine Speichereinheit (34), die dafür ausgebildet ist, die von der Messeinheit (30) erfassten weiteren Messwerte zu speichern;
- eine Belastungsermittlungseinheit (36), die dafür ausgebildet ist, unter Berücksichtigung der in der Speichereinheit (34) erfassten Messwerte und weiteren Messwerte für Positionswertepaare von erfassten Positionen (50') und weiteren Positionen (50") jeweils einen zugeordneten Belastungswert (52) zu ermitteln; und
- eine Ausgabeeinheit (38), die dafür ausgebildet ist, die Positionswertepaare mit dem jeweiligen zugeordneten Belastungswert (52) auszugeben oder aus einer Gesamtzahl der ermittelten Belastungswerte (52) mindestens einen Hochbelastungswert zu ermitteln, der größer ist als die anderen Belastungswerte (52) der Gesamtzahl, und den mindestens einen ermittelten Hochbelastungswert mit dem jeweiligen zugeordneten Positionswertepaar auszugeben.

## Claims

1. Device (10) for detecting highly loaded positions (50) in a machine tool (12) having a spindle unit (14) having a spindle head (16) and a spindle motor (18), the device (10) comprising:
- a measuring unit (30) adapted to acquire, during operation of the spindle unit (14), measured values (32) relative to the spindle head (16), the measured values (32) having a current position (50) of the spindle head (16) relative to a fixed point (FP) of the machine tool (12);
- a memory unit (34) adapted to store the measured values (32) read by the measuring unit (30);
- a load determination unit (36) adapted to determine an associated load value (52) for each of the detected positions (50) taking into account the measured values (32) recorded in the storage unit (34); and
- an output unit (38) which is designed to output the detected positions (50) with the respective associated load value (52) or to determine from a total number of the determined load values (52) at least one heavy load value which is greater than the other load values (52) of the total number, and to output the at least one determined heavy load value with the position (50) assigned to it,
wherein the load value (52) is determined or is included in the determination of the load value (52) such that a first position (50) which has been detected more often in the measured values (32) is assigned a higher value than a second position (50) which has been detected less often in the measured values than the first position (50).

2. Device according to claim 1 further comprising a timer adapted to generate continuous time information (42) during operation of the spindle unit (14) and to output the time information (42) simultaneously with the acquired measured values (32).

3. Device according to any of the preceding claims, the measured values (32) further having an additional value (46) having a speed of the spindle head (16) relative to the fixed point (FP).

4. Device according to any of the preceding claims, the measured values (32) further having an additional value (46) having an acceleration of the spindle head (16) relative to the fixed point (FP).

5. Device according to one of claims 3 or 4, the additional value (46) being obtained from a control program (44) of the machine tool (12).

6. Device according to any of the preceding claims, the measured values (32) further having an additional value (46) having a mechanical load acting on the spindle head (16).

7. Device according to any of the preceding claims, the measured values (32) further having an additional value (46) having a current flowing into the spindle motor (16).

8. Device according to any of the preceding claims, the measured values (32) further having an additional value having a spindle head (16) speed.

9. Device according to any of the preceding claims, wherein the load value (52) is determined or is included in the determination of the load value (52) such that a first position (50) at which a first sum of the additional values detected at the first position (50) is greater is assigned a higher value than a second position (50) at which a second sum of the corresponding additional values detected at the second position (50) is less.

10. Device according to any of the preceding claims, wherein the load value (52) is determined or is included in the determination of the load value (52) such that a first position (50) at which a first maximum of the additional values detected at the first position (50) is greater is assigned a higher value than a second position (50) at which a second maximum of the corresponding additional values detected at the second position (50) is less.

11. Device according to one of the preceding claims, wherein the load value (52) is determined or is included in the determination of the load value (52) in such a way that measured values (32), in particular additional values, which exceed a predetermined threshold value are acted upon with an additive element or a factor.

12. Device according to any of the preceding claims, where
the measuring unit (30) is further adapted to acquire further measured values to the spindle head (16) during operation of the spindle unit (14), the further measured values having a current further position (50") of the spindle head (16) along a further axis which is at an angle to an axis along which the detected positions (50') are determined;
a memory unit (34) adapted to store the additional readings acquired by the measuring unit (30);
a load determination unit (36) adapted to determine an associated load value (52) taking into account the measured values recorded in the storage unit (34) and further measured values for position value pairs of detected positions (50") and further positions (50"); and
an output unit (38) which is designed to output the position value pairs with the respective assigned load value (52) or to determine from a total number of the determined load values (52) at least one heavy load value which is greater than the other load values (52) of the total number, and to output the at least one determined heavy load value with the respective assigned position value pair.

## Revendications

1. Dispositif (10) pour déterminer des positions fortement chargées (50) dans une machine-outil (12) avec une unité de broche (14) qui a une tête de broche (16) et un moteur de broche (18), comprenant le dispositif (10) :
- une unité de mesure (30) qui est conçue pour enregistrer des valeurs de mesure (32) concernant la tête de broche (16) pendant le fonctionnement de l'unité de broche (14), les valeurs de mesure (32) présentant une position actuelle (50) de la tête de broche (16) par rapport à un point fixe (FP) de la machine-outil (12) ;
- une unité de mémoire (34) qui est conçue pour stocker les valeurs de mesure (32) détectées par l'unité de mesure (30) ;
- une unité de détermination de charge (36) qui est conçue pour déterminer, en tenant compte des valeurs de mesure (32) saisies dans l'unité de mémoire (34), une valeur de charge (52) associée pour chacune des positions (50) saisies ; et
- une unité de sortie (38) qui est conçue pour sortir les positions (50) détectées avec la valeur de charge (52) associée respective ou pour déterminer, à partir d'un nombre total des valeurs de charge (52) déterminées, au moins une valeur de charge élevée qui est plus grande que les autres valeurs de charge (52) du nombre total, et pour sortir la au moins une valeur de charge élevée déterminée avec la position (50) qui lui est associée,
la valeur de charge (52) étant déterminée ou entrant dans la détermination de la valeur de charge (52) de telle sorte qu'une valeur plus élevée est attribuée à une première position (50), qui a été saisie plus souvent dans les valeurs de mesure (32), qu'à une deuxième position (50), qui a été saisie moins souvent dans les valeurs de mesure que la première position (50).

2. Dispositif selon la revendication 1, comprenant en outre un temporisateur qui est conçu pour générer une information temporelle continue (42) pendant le fonctionnement de l'unité de broche (14) et pour émettre l'information temporelle (42) en même temps que les valeurs de mesure (32) détectées.

3. Dispositif selon l'une quelconque des revendications précédentes, dans lequel les valeurs mesurées (32) comprennent en outre une valeur supplémentaire (46) comprenant une vitesse de la tête de broche (16) par rapport au point fixe (FP).

4. Dispositif selon l'une quelconque des revendications précédentes, dans lequel les valeurs mesurées (32) comprennent en outre une valeur supplémentaire (46) comprenant une accélération de la tête de broche (16) par rapport au point fixe (FP).

5. Dispositif selon l'une des revendications 3 ou 4, dans lequel la valeur additionnelle (46) est obtenue à partir d'un programme de commande (44) de la machine-outil (12).

6. Dispositif selon l'une quelconque des revendications précédentes, dans lequel les valeurs mesurées (32) comprennent en outre une valeur supplémentaire (46) comprenant une charge mécanique agissant sur la tête de broche (16).

7. Dispositif selon l'une quelconque des revendications précédentes, dans lequel les valeurs mesurées (32) comprennent en outre une valeur supplémentaire (46) comprenant un courant circulant dans le moteur de broche (16).

8. Dispositif selon l'une quelconque des revendications précédentes, dans lequel les valeurs mesurées (32) comprennent en outre une valeur supplémentaire comprenant une vitesse de rotation de la tête de broche (16).

9. Dispositif selon l'une des revendications précédentes, dans lequel la valeur de charge (52) est déterminée ou intervient dans la détermination de la valeur de charge (52) de telle sorte qu'une valeur plus élevée est attribuée à une première position (50), dans laquelle une première somme des valeurs supplémentaires détectées dans la première position (50) est supérieure, qu'à une deuxième position (50), dans laquelle une deuxième somme des valeurs supplémentaires correspondantes détectées dans la deuxième position (50) est inférieure.

10. Dispositif selon l'une des revendications précédentes, dans lequel la valeur de charge (52) est déterminée ou intervient dans la détermination de la valeur de charge (52) de telle sorte qu'une valeur plus élevée est attribuée à une première position (50), dans laquelle un premier maximum des valeurs additionnelles détectées dans la première position (50) est supérieur, qu'à une deuxième position (50), dans laquelle un deuxième maximum des valeurs additionnelles correspondantes détectées dans la deuxième position (50) est inférieur.

11. Dispositif selon l'une des revendications précédentes, dans lequel la valeur de charge (52) est déterminée ou intervient dans la détermination de la valeur de charge (52) de telle sorte que des valeurs de mesure (32), en particulier des valeurs supplémentaires, qui dépassent une valeur seuil prédéfinie, sont soumises à un élément additif ou à un facteur.

12. Dispositif selon l'une quelconque des revendications précédentes, dans lequel
- l'unité de mesure (30) est en outre adaptée pour acquérir d'autres valeurs de mesure concernant la tête de broche (16) pendant le fonctionnement de l'unité de broche (14), les autres valeurs de mesure comprenant une autre position actuelle (50") de la tête de broche (16) le long d'un autre axe qui forme un angle avec un axe le long duquel les positions saisies (50') sont déterminées ;
- une unité de mémoire (34) qui est conçue pour stocker les autres valeurs de mesure saisies par l'unité de mesure (30) ;
- une unité de détermination de charge (36) qui est conçue pour déterminer, en tenant compte des valeurs de mesure saisies dans l'unité de mémoire (34) et d'autres valeurs de mesure pour des paires de valeurs de position de positions saisies (50') et d'autres positions (50"), respectivement une valeur de charge (52) associée ; et
- une unité de sortie (38) qui est conçue pour sortir les paires de valeurs de position avec la valeur de charge (52) associée respective ou pour déterminer, à partir d'un nombre total des valeurs de charge (52) déterminées, au moins une valeur de charge élevée qui est plus grande que les autres valeurs de charge (52) du nombre total, et pour sortir la au moins une valeur de charge élevée déterminée avec la paire de valeurs de position associée respective.
